# EUROPEAN PATENT SPECIFICATION

(11) **EP 2 608 489 B1**
(45) Date of publication and mention of the grant of the patent: **05.04.2017**
(21) Application number: 11783071.1
(22) Date of filing: 02.06.2011
(51) Int. Cl.: H04L 29/12

(54) **METHOD, DEVICE AND SYSTEM FOR ALLOCATING INTERNET PROTOCOL ADDRESS OF EXTERNAL NETWORK IN NETWORK ADDRESS TRANSLATION PASS-THROUGH**
VERFAHREN, VORRICHTUNG UND SYSTEM FÜR DIE ZUWEISUNG VON INTERNETPROTOKOLLADRESSEN EINES EXTERNEN NETZWERKES BEIM NETZWERKADRESSENÜBERSETZUNGSDURCHGANG
PROCÉDÉ, DISPOSITIF ET SYSTÈME D'ATTRIBUTION D'ADRESSE DE PROTOCOLE INTERNET DE RÉSEAU EXTERNE DANS UNE FONCTION D'INTERCOMMUNICATION À TRADUCTION D'ADRESSE RÉSEAU

(30) Priority: 15.10.2010 CN 201010508346
(43) Date of publication of application: 26.06.2013
(73) Proprietor: Huawei Technologies Co., Ltd., Longgang District Shenzhen, Guangdong 518129 (CN)
(72) Inventor: ZHA, Min, Guangdong 518129 (CN); HUANG, Jing, Guangdong 518129 (CN)
(74) Representative: Gill Jennings & Every LLP
(86) International application number: PCT/CN2011/075185
(87) International publication number: WO 2011/144154

(56) References cited:
- CN-A- 1 550 094
- CN-A- 1 694 430
- CN-A- 1 976 356
- CN-A- 101 119 273
- KR-A- 20040 028 046
- US-A1- 2007 157 303
- ROSENBERG J WEINBERGER DYNAMICSOFT C HUITEMA MICROSOFT R MAHY CISCO J: "STUN - Simple Traversal of User Datagram Protocol (UDP) Through Network Address Translators (NATs); rfc3489.txt", 20030301, 1 March 2003 (2003-03-01), XP015009272, ISSN: 0000-0003
- ROHIT MASCON GLOBAL LIMITED P SRISURESH CAYMAS SYSTEMS R ET AL: "Definitions of Managed Objects for Network Address Translators (NAT); rfc4008.txt", 20050301, 1 March 2005 (2005-03-01), XP015041991, ISSN: 0000-0003
- WING CISCO R PENNO JUNIPER NETWORKS M BOUCADAIR FRANCE TELECOM D: "Pinhole Control Protocol (PCP); draft-wing-softwire-port-control-protocol- 02.txt", PINHOLE CONTROL PROTOCOL (PCP); DRAFT-WING-SOFTWIRE-PORT-CONTROL-PROTOCOL- 02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 10 July 2010 (2010-07-10), pages 1-32, XP015069584, [retrieved on 2010-07-10]
- TSOU T ET AL: "Ensuring Address Reuse In the Pinhole Control Protocol (PCP); draft-tsou-pcp-address-modify-00.txt", ENSURING ADDRESS REUSE IN THE PINHOLE CONTROL PROTOCOL (PCP); DRAFT-TSOU-PCP-ADDRESS-MODIFY-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 16 October 2010 (2010-10-16), pages 1-6, XP015071733, [retrieved on 2010-10-16]

## Description

### FIELD OF THE INVENTION

The present invention relates to the field of communications, and in particular, to a method for allocating an external network Internet protocol IP address in NAT traversal, and a device and a system.

### BACKGROUND OF THE INVENTION

Currently, almost all of IPv4 addresses are allocated, and a problem of IP (Internet Protocol, Internet protocol) address shortage is very serious. The industry generally thinks that IPv6 is a fundamental way to solve the problem. However, the progress of IPv6 deployment is not ideal; therefore, IPv6 cannot solve the problem of the address shortage in a short term. In a short term, deployment of NAT (Network Address Translation, network address translation) in a carrier network (CGN, Carrier Grade NAT, carrier-grade NAT) is an effective way to temporarily alleviate the problem of the address shortage.

However, the deployment of the NAT in the carrier network will bring many problems, especially with respect to NAT traversal. A main problem in the NAT traversal is that, payloads of some communication protocol packets carries IP addresses; however, only an address in a packet header is modified in common NAT translation. As a result, a communication protocol cannot work normally. Impacted communication protocols are FTP (File Transfer Protocol, File Transfer Protocol) and SIP (Session Initiation Protocol, Session Initiation Protocol).

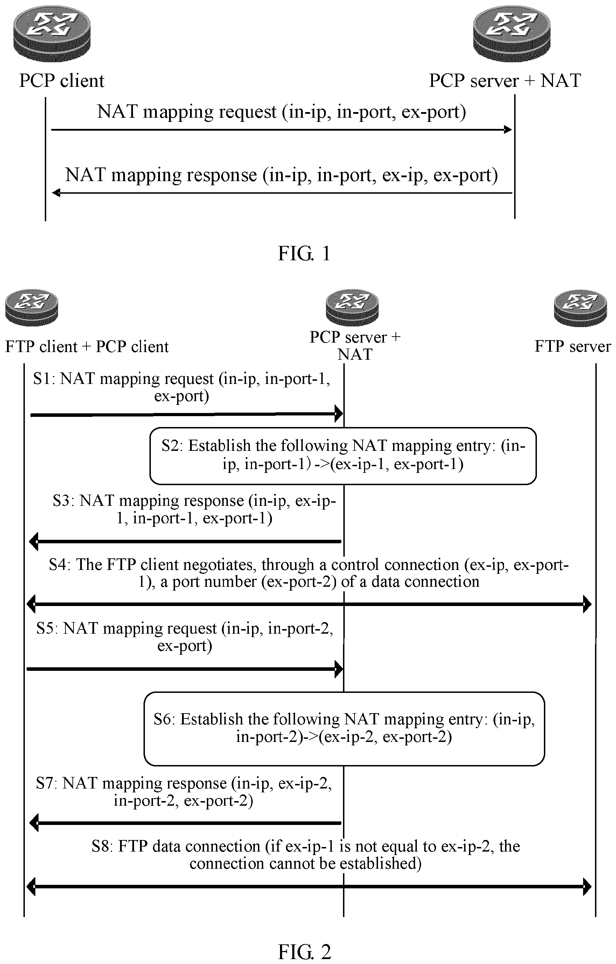

A method for solving a problem of the NAT traversal is to use an application layer gateway (ALG, Application Layer Gateway), which, however, is not a mainstream manner. At present, the PCP (Pinhole Control Protocol, Pinhole Control Protocol) protocol is usually used to implement the NAT traversal. As shown in FIG. 1, in the PCP protocol, a client sends a PCP server side a request, requesting opening an external network port number (ex-port). If a PCP server checks and finds that the port is not used, the PCP server establishes a NAT mapping entry: an internal network IP (in-ip) + an internal network port number (ip-port) and an external network IP (ex-ip) + an external network port number (ex-port), and at the same time the PCP server returns, to the client, information about the external network IP and the external network port number. When an application of the client needs to advertise its own IP and port number to a network, the application advertises its own external network IP (ex-ip) and external network port number (ex-port). Other network nodes may use the external network IP and the external network port number as a destination address and a destination port number, and actively initiate access to the client. A NAT device translates a packet according to a NAT mapping entry which is established during PCP negotiation, so as to translate the external network IP and the external network port number into an internal network IP and an internal network port number; and performs reverse translation when the client needs to send a packet to other nodes. Disadvantages in implementing the NAT traversal by the existing PCP protocol are: In NAT in a carrier network (CGN), usually one external network IP address pool is used, and the address pool includes multiple IP addresses. When an application needs to establish one connection, the NAT device selects one IP and one port to establish a NAT mapping entry. When the same application establishes multiple connections, the existing PCP protocol cannot ensure that external network IP addresses of the multiple connections are the same, thereby causing that the application cannot transmit data correctly or is vulnerable to a network attack.

### SUMMARY OF THE INVENTION

The present invention provides A method for allocating an external network IP address in NAT traversal, including:
receiving, by a NAT device, a request message which is sent by a client and is for establishing a NAT mapping entry corresponding to a connection, wherein the request message includes a designated index value, and an external network IP address in an IP address index table corresponding to the designated index value is the same as an external network IP address in a NAT mapping entry corresponding to any connection already established by a same application of the client; and
when the NAT mapping entry is established according to the received request message, finding, by the NAT device, according to the designated index value, the corresponding external network IP address in the IP address index table, and allocating an IP address which is the same as the external network IP address corresponding to the designated index value.

The present invention further provides a NAT device, including:
a receiving unit, configured to receive a request message which is sent by a client and is for establishing a NAT mapping entry corresponding to a connection, wherein the request message includes a designated index value, and an external network IP address in an IP address index table corresponding to the designated index value is the same as an external network IP address in a NAT mapping entry corresponding to any connection already established by a same application of the client;
an establishment unit, configured to establish the NAT mapping entry corresponding to the connection according to the request message received by the receiving unit; and
an allocation unit, wherein the allocation unit includes:
   an obtaining module, configured to obtain the designated index value in the request message which is received by the receiving unit, is sent by the client, and is for establishing the NAT mapping entry corresponding to the connection;
   a search module, configured to find, according to the designated index value, a corresponding external network IP address in the IP address index table; and
   a processing module, configured to allocate an IP address which is the same as the external network IP address corresponding to the designated index value and used as an external network IP address in the NAT mapping entry which is to be established by the establishment unit according to the request message

The present invention further provides a method for allocating an external network IP address in NAT traversal, including:
comprising, by a communication device, a designated index value in a request message which is sent to a NAT device and is for establishing a NAT mapping entry corresponding to a connection, wherein an external network IP address in an IP address table corresponding to the designated index value is the same as an external network IP address in a NAT mapping entry corresponding to any connection already established by a same application;
sending, by the communication device, the NAT device the request message comprising the designated index value;
wherein the designated index value enables the NAT device to: when the NAT mapping entry is established according to the request message, find, according to the designated index value, the corresponding external network IP address in the IP address index table, allocate, according to the designated index value, an IP address which is the same as the external network IP address corresponding to the designated index value and used as an external network IP address of a NAT mapping entry to be established by the NAT device

The present invention further provides a communication device, including:
a setting unit, configured to designate an index value in a request message which is sent to a NAT device and is for establishing a NAT mapping entry corresponding to a connection, wherein an external network IP address in an IP address index table corresponding to the designated index value is the same as an external network IP address in a NAT mapping entry corresponding to any connection already established by a same application on the communication device, wherein the designated index value enables the NAT device to: when establishing the NAT mapping entry according to the request message, allocate, according to an external network IP address which is found according to the designated index value, an IP address which is the same as the external network IP address and used as an external network IP address of a NAT mapping entry to be established by the NAT device; and
a sending unit, configured to send the NAT device the request message comprising the index value designated by the setting unit..

The present invention further provides a NAT system, including:
a client device and a server side device, where the foregoing communication device is adopted as the client device, and the foregoing NAT device is adopted as the server side device.

From the technical solutions provided in the present invention, it can be seen that, when the NAT mapping entry is established, and according to the designated external network IP address in the received request message sent by the client, the IP address which is the same as the external network IP address is allocated and used as an external network IP address in the NAT mapping entry to be established. Furthermore, the designated external network IP address in the received request message sent by the client is the same as an external network IP address in a NAT mapping entry corresponding to a connection already established by the same application. In this way, a problem which occurs frequently in an existing NAT traversal solution and is that an application cannot work normally or is vulnerable to a network attack because external network IP addresses of multiple connections of a same application are different after NAT traversal is well solved. This method significantly improves the adaptive capability of the NAT traversal protocol to the existing application and enhances the performance of a NAT device.

### BRIEF DESCRIPTION OF THE DRAWINGS

To illustrate technical solutions in embodiments of the present invention or in the prior art more clearly, accompanying drawings to be used for describing the embodiments or the prior art are introduced briefly in the following. Apparently, the accompanying drawings in the following description are only some embodiments of the present invention, and a person having ordinary skill in the art can derive other drawings from these accompanying drawings without making creative efforts.
FIG. 1 is a schematic diagram of implementing NAT traversal by the PCP protocol in the prior art;
FIG. 2 is a schematic diagram of implementing, by using the PCP protocol, NAT traversal in an FTP application in the prior art;
FIG. 3 is a flow chart of a method according to Embodiment 1 of the present invention;
FIG. 4 is a schematic diagram of applying the method to the PCP protocol according to Embodiment 1 of the present invention;
FIG. 5 is a schematic diagram of implementing, by using the PCP protocol, NAT traversal in an FTP application according to Embodiment 2 of the present invention;
FIG. 6 is a schematic diagram of implementing, by using the PCP protocol, the NAT traversal in the FTP application when IP address allocation fails according to Embodiment 2 of the present invention;
FIG. 7 is a flow chart of a method according to Embodiment 3 of the present invention;
FIG. 8 is a structural block diagram of a NAT device according to Embodiment 4 of the present invention;
FIG. 9 is a structural block diagram of an allocation unit of the NAT device according to Embodiment 4 of the present invention;
FIG. 10 is another structural block diagram of the allocation unit of the NAT device according to Embodiment 4 of the present invention;
FIG. 11 is a structural block diagram of a communication device according to Embodiment 5 of the present invention; and
FIG. 12 is a schematic diagram of a communication system according to Embodiment 7 of the present invention.

### DETAILED DESCRIPTION OF THE EMBODIMENTS

Specific implementation processes of the present invention are illustrated below through embodiments with examples. It is obvious that the embodiments to be described below are part rather than all of the embodiments of the present invention. All other embodiments obtained by a person having ordinary skill in the art based on the embodiments of the present invention without creative efforts shall fall within the protection scope of the present invention.

In current NAT traversal, when a same application needs to establish multiple connections, it cannot be ensured that IP addresses of the multiple connections are the same. When IP addresses of multiple connections are not the same, some communication protocols cannot work normally, for example, an FTP application shown in FIG. 2. When a client (running an FTP client program and used as a PCP client) needs to perform FTP negotiation, the client opens, through the PCP protocol and on a NAT device, a port ex-port-1 corresponding to ex-ip-1. A packet received by an FTP server from the client carries ex-ip-1 and ex-port-1. When the client needs to transmit data, the client opens, on the NAT device, a second port ex-port-2 corresponding to an external network IP address ex-ip-2. The client notifies the FTP server of ex-ip-2 and ex-port-2, and the FTP server sends a data stream to the address (that is, ex-ip-2 and ex-port-2). However, the current PCP protocol cannot ensure that ex-ip-1 and ex-ip-2 are the same, that is, cannot ensure that external network IP addresses of two connections established by the same application are the same after the NAT traversal. If the external network IP addresses of two connections are not the same, such a case may become a means for a network attack, for example, after completing negotiation with a server, an attacker makes the server send a data stream to an attack target. Technical solutions in embodiments of the present inventions can ensure that external network IP addresses of multiple connections established by the same application are the same after the NAT traversal.

### Embodiment 1

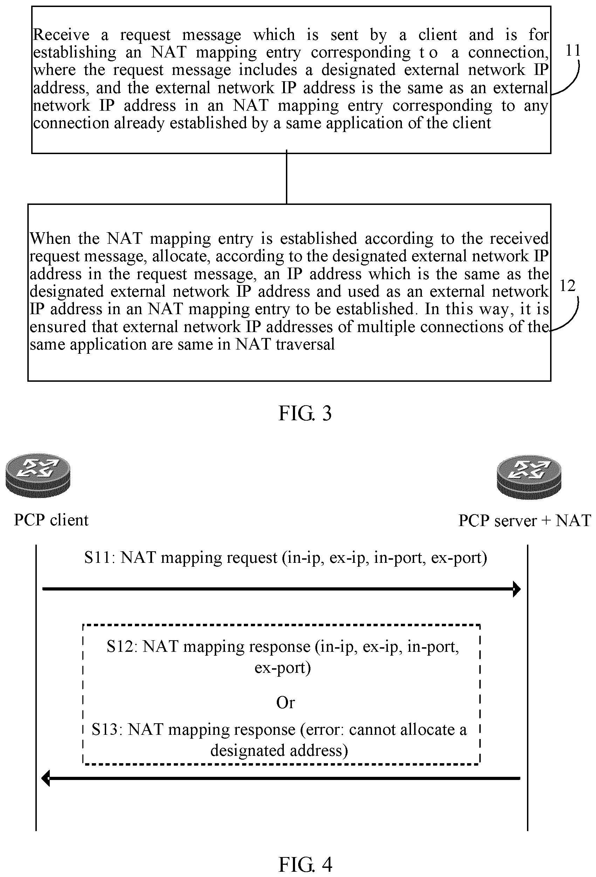

This embodiment provides a method for allocating an external network Internet protocol IP address in NAT traversal, which is a method that may be applied to a NAT traversal control protocol (for example, a PCP protocol) to make external network addresses of multiple connections of a same application after the NAT traversal be the same. The method may be implemented by a NAT device. As shown in FIG. 3, the method specifically includes:
Step 11: Receive a request message which is sent by a client and is for establishing a NAT mapping entry corresponding to a connection, where the request message includes a designated external network IP address, and the external network IP address is the same as an external network IP address in a NAT mapping entry corresponding to any connection already established by a same application of the client.

A request message may include a designated external network IP address in multiple manners. The designated external network IP address may be directly carried in the request message, or a designated index value may be carried in the request message, so that a receiving side may find a corresponding external network IP address in an IP address index table according to the designated index value. An index value designated by the client may be obtained by adopting the following manner. When establishing the foregoing connection of the same application, the client obtains, in a returned response message, an external network IP address of an already established NAT mapping entry, and then searches the IP address index table to determine an index value corresponding to the external network IP address. In another method for obtaining an index value, the foregoing response message may include the index value directly, where the index value is an index value that corresponds, in the IP address index table, to an external network IP address of a NAT mapping entry, after the NAT mapping entry is established for a connection of the same application.

Step 12: When the NAT mapping entry is established according to the received request message, allocate, according to the designated external network IP address in the request message, an IP address which is the same as the designated external network IP address and used as an external network IP address of a NAT mapping entry to be established. In this way, it is ensured that external network IP addresses of multiple connections of the same application are the same in the NAT traversal.

If the request message carries a designated index value, first an IP address index table is searched according to the designated index value to obtain a designated external network IP address; then, according to the designated external network IP address, an IP address which is the same as the designated external network IP address is allocated and used as the external network IP address of the NAT mapping entry to be established.

The foregoing method further includes: if the IP address which is the same as the external network IP address cannot be allocated and used as the external network IP address in the NAT mapping entry to be established, returning prompt information indicating a failure of allocation. In this way, according to the returned prompt information indicating the failure of the allocation, the application of the client may disconnect a previously established connection, reestablish each connection, and reestablish, through a NAT traversal control protocol (for example, the PCP protocol), a NAT mapping entry corresponding to each connection.

A case where the foregoing method is applied to the PCP protocol is further described below with reference to FIG. 4.

Through the foregoing method, the request message which is sent by a PCP client of the PCP protocol and is for establishing a NAT mapping entry for a connection includes the designated external network IP address, the designated external network IP address is the same as an external network IP address of a NAT mapping entry corresponding to any connection already established by the same application (an external network IP address of a NAT mapping entry corresponding to an already established connection may be obtained through the external network IP address included in a response message after a PCP server establishes the NAT mapping entry corresponding to the connection). In this way, a PCP server side may allocate, according to the designated external network IP address, the external network IP address of the NAT mapping entry to be established. A specific procedure in the PCP protocol is as follows:
Step S 11: A PCP client sends a NAT mapping request to a PCP server run by a NAT device, where the NAT mapping request includes the following parameters: in-ip, ex-ip, in-port, and ex-port (an internal network IP address, an external network IP address, an internal network port number, and an external network port number), the external network port number may not be designated specifically, for example, the external network port number is 0; ex-ip is a designated external network IP address, and the designated external network IP address ex-ip is the same as an external network IP address of a NAT mapping entry corresponding to any connection already established by a same application.

For some applications which do not need to designate an external network port number in a NAT mapping request, the ex-port (an external network port number) in the NAT mapping request may be set to a specific value, for example, 0, so that the server side does not use this parameter.

Step S12: The PCP server establishes a NAT mapping entry according to request message sent by the PCP client, where the NAT mapping entry is (in-ip, ex-ip)->(in-port, ex-port), ex-ip in the NAT mapping entry is an external network IP address designated by the PCP client, and ex-port is allocated by the PCP server itself. After the NAT mapping entry is established, a NAT mapping response with which the PCP server replies to the PCP client is (in-ip, ex-ip, in-port, ex-port). After step S11 and step S12, it is ensured that when the same application that needs to establish multiple connections establishes a successive connection, an external network IP address in a NAT mapping entry corresponding to the connection to be established is the same as an external network IP address in a NAT mapping entry corresponding to any connection already established by the application. In this way, external network IP addresses of multiple connections of the FTP application are the same after the NAT traversal, which ensures that the FTP application can be connected to transmit data properly and avoids an attack due to the difference of external network IP addresses of multiple connections.

When the PCP server cannot allocate a same external network IP address according to the designated external network IP address, step S 13 is further included, where prompt information indicating a failure of allocation that is in a NAT mapping response with which the NAT mapping response PCP server replies to the PCP client, is: cannot allocate a designated address (cannot assign mandatory address).

In actual implementation, when establishing a connection, the application may not designate an external network IP address in a PCP request message when requesting establishment of a first connection, and the PCP server is allowed to perform allocation arbitrarily. After a corresponding NAT mapping entry is established for the first connection, the application may, after obtaining the external network IP address and when establishing a successive connection, use the external network IP address as a designated external network IP address in a sent PCP request message, and request the PCP server to allocate an IP address which is the same as the designated external network IP address. In this way, an external network IP address in a NAT mapping entry corresponding to a successive connection is the same as an external network IP address in a NAT mapping entry corresponding to a previously established connection, which avoids a problem that the application cannot be connected normally because of inconsistency of external network addresses of multiple connections.

### Embodiment 2

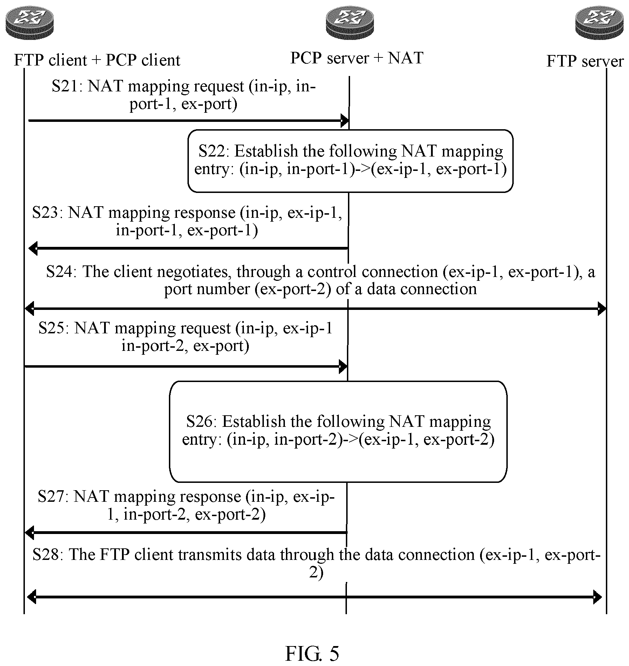

In this embodiment, a method for allocating an external network Internet protocol IP address in NAT traversal provided in the embodiment of the present invention is illustrated with reference to a processing process which makes external network IP addresses of multiple connections be the same after the NAT traversal in an FTP application. Referring to FIG. 5, a client communicates with and is connected to an FTP server through a NAT device, an FTP client program and a PCP client program are run on the client, and a PCP server runs on the NAT device. The method specifically includes the following steps:
Step S21: The FTP client program first establishes a control connection, and the client sends a NAT mapping request to the PCP server, where the NAT mapping request includes parameters (in-ip, in-ipor, ex-port-1), in-ip is an internal network IP address, in-ipor is an internal network port number, and ex-port-1 is an external network port number.
Step S22: After receiving the NAT mapping request of the client, the PCP server obtains an external network IP address ex-ip-1 and the external network port number ex-port-1, and the PCP server establishes, according to the NAT mapping request and the obtained external network IP address (ex-ip-1) and external network port number (ex-port-1), a NAT mapping entry: (in-ip, in-port-1)→(ex-ip-1, ex-port-1).
Step S23: After establishing the NAT mapping entry for the control connection, the PCP server replies to the client with a NAT mapping response, where the NAT mapping response includes (in-ip, in-ipor, ex-ip-1, ex-port-1). In this case, the NAT mapping entry for the control connection of the FTP application is established.
Step S24: When the FTP client needs to provide the FTP server with a destination IP address and a destination port number for data transmission, the client needs to establish, through the PCP protocol and on the NAT device, a NAT mapping entry for a data connection of the FTP application; in this case, the FTP client negotiates, through the control connection (the control connection includes parameters: ex-ip-1, ex-port-1), with the FTP server about the port number (ex-port-2) of the data connection.
Step S25: After determining, through negotiation, the port number (ex-port-2), the client sends the PCP server a NAT mapping request for establishing the NAT mapping entry of the corresponding data connection, where the NAT mapping request includes (in-ip, ex-port-1, in-ipor-2, ex-port-2). Step S26: After receiving the NAT mapping request of the client, the PCP server obtains the external network port number (ex-port-2) on the designated external network IP address (ex-port-1) in the NAT mapping request; and after obtaining the port number (ex-port-2), establishes, according to the NAT mapping request, the NAT mapping entry: (in-ip, in-port-2)→(ex-ip-1, ex-port-2).
Step S27: After establishing the NAT mapping entry for the data connection, the PCP server replies to the client with a NAT mapping response, where the NAT mapping response includes (in-ip, ex-ip-1, in-port-2, ex-port-2). In this case, the NAT mapping entry for the data connection of the FTP application is established.

The FTP client notifies the FTP server of the external network IP address (ex-ip-1) and the port number (ex-port-2), which ensures that the external network IP address of the control connection and the external network IP address of the data connection are the same and the FTP server uses ex-ip-1 and ex-port-2 as a destination IP address and a destination port number for data transmission.

In the foregoing process for establishing the NAT traversal, due to some reasons, for example, no spare port is available to be allocated to the external network IP address that is designated to be allocated under the requirement of the PCP client, and in this case, a processing procedure is shown in FIG. 5.

The processing process of steps S31 to 35 is substantially the same as that of steps S21 to S25 above, and the differences are:
Step S36: After receiving a NAT mapping request of the client, the PCP server cannot obtain a port number (ex-port-2) on a designated external network IP address (ex-port-1) in the NAT mapping request, for example, There is no available port corresponding to the designated external network IP address (ex-port-1) in the NAT mapping request, which causes that the external network port number (ex-port-2) cannot be obtained, and therefore, the PCP server replies to the client with a NAT mapping response, where the NAT mapping response includes error prompt information: cannot allocate a designated address (cannot assign mandatory address).
Step S37: The FTP server removes an established control connection, and reestablishes each connection.

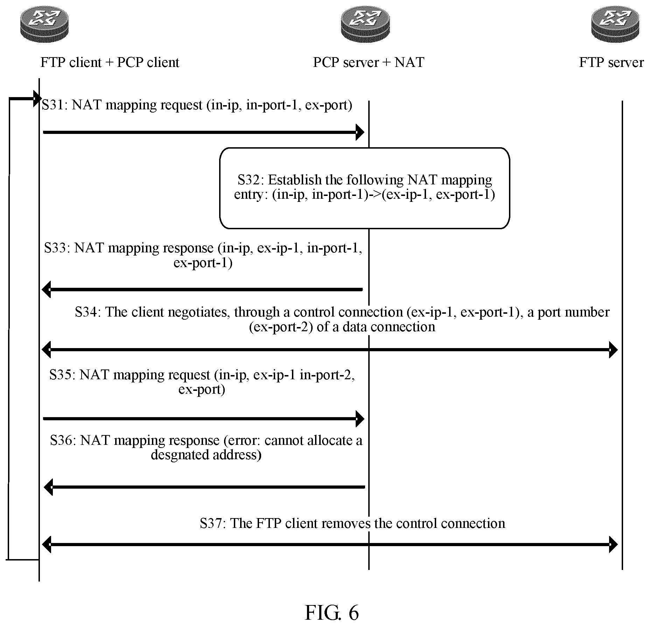

It can be seen from FIG. 6 that, the FTP client succeeds in requesting allocation of a first IP address (ex-ip-1) and the port (ex-port-1), but fails to request allocation of a second port (ex-port-2) of the IP (ex-ip-1), that is, there is no available port corresponding to the IP (ex-ip-1). In this case, the FTP client needs to terminate a current FTP connection and restart to attempt to establish a connection. To prevent the NAT device from reallocating a previous IP address (that is, an address being the same as ex-ip-1) to the FTP client, the FTP client may first apply, through the PCP protocol, for an IP (an external network IP address different from ex-ip-1), and then remove the current FTP connection and reestablish a new FTP connection.

In step S36, if there still is an available port corresponding to but ex-port-2 is occupied, in this case, optionally, it may return information that a designated port cannot be allocated. In this case, the FTP client may not need to remove the control connection, but renegotiate with the FTP server about a port number for a data connection, and the foregoing steps are repeated.

It can be known that, in the FTP application, an external network IP address is designated in a NAT mapping request, and a manner that an index value is designated in the NAT mapping request so that the server finds, through the index value, a corresponding external network IP address in an IP address index table may also be adopted. In this manner, it may also be implemented that the client designates an external network IP address, so that the server side allocates, according to the designated external network IP address, an external network IP address for establishing a NAT mapping entry, thereby ensuring that external network IP addresses of multiple connections in the FTP application are the same after the NAT traversal.

### Example implementation

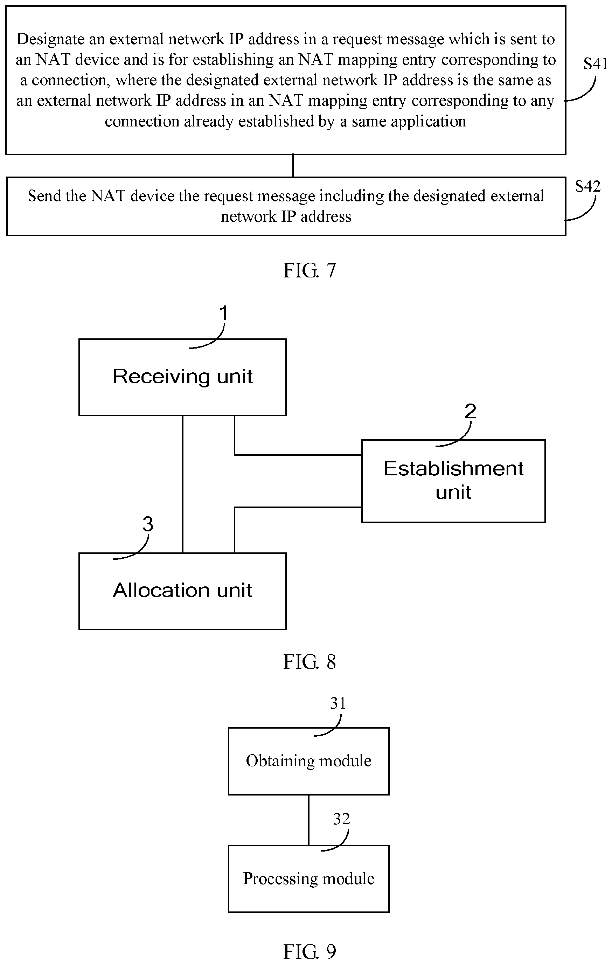

This example implementation provides a method for allocating an external network Internet protocol IP address in NAT traversal. As shown in FIG. 7, the method includes:
Step S41: Designate an external network IP address in a request message which is sent to a NAT device and is for establishing a NAT mapping entry corresponding to a connection, where the designated external network IP address is the same as an external network IP address in a NAT mapping entry corresponding to any connection already established by a same application;

The designated external network IP address enables the NAT device to: when a NAT mapping entry is established according to the request message, allocate, according to the designated external network IP address, an IP address which is the same as the designated external network IP address and used as an external network IP address of a NAT mapping entry to be established by the NAT device.

Step S42: Send the NAT device the request message including the designated external network IP address.

### Embodiment 4

This embodiment provides a NAT device, which is as shown in FIG. 8, and includes:
a receiving unit 1, configured to receive a request message which is sent by a client and is for establishing a NAT mapping entry corresponding to a connection, where the request message includes a designated external network IP address, and the external network IP address is the same as an external network IP address in a NAT mapping entry corresponding to any connection already established by a same application;
an establishment unit 2, configured to establish the NAT mapping entry corresponding to the connection, according to the request message received by the receiving unit; and an allocation unit 3, configured to, when the establishment unit establishes the NAT mapping entry according to the received request message, allocate, according to the designated external network IP address in the request message received by the receiving unit, an IP address which is the same as the designated external network IP address and used as an external network IP address of a NAT mapping entry to be established by the establishment unit.

As shown in FIG. 9, the allocation unit in the foregoing NAT device includes:
an obtaining module 31, configured to obtain the designated external network IP address in the request message which is received by the receiving unit, is sent by the client, and is for establishing the NAT mapping entry corresponding to the connection; and
a processing module 32, configured to allocate the IP address which is the same as the external network IP address and used as the external network IP address in the NAT mapping entry which is to be established by the establishment unit according to the request message.

The NAT device may allocate, according to the designated external network IP address in the received request message sent by the client, the IP address which is the same as the external network IP address and used as the external network IP address in the NAT mapping entry to be established.

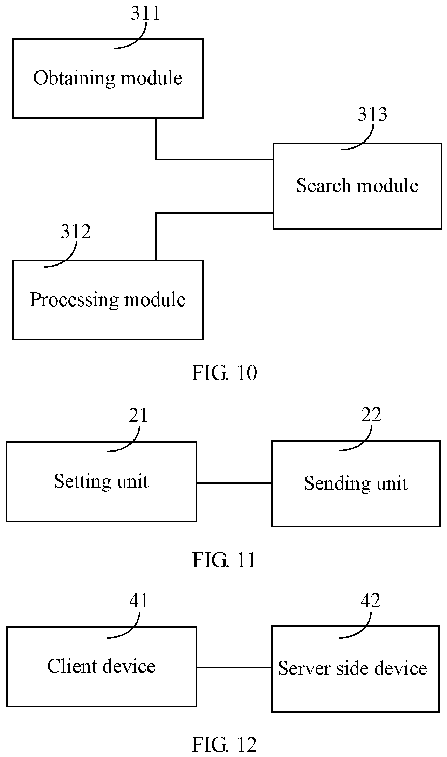

As shown in FIG. 10, another structural form of the allocation unit in the foregoing NAT device includes:
an obtaining module 311, configured to obtain a designated index value in the request message which is received by the receiving unit, is sent by the client, and is for establishing the NAT mapping entry corresponding to the connection;
a search module 313, configured to find, according to the designated index value, a corresponding external network IP address in an IP address index table; and
a processing module 312, configured to allocate the IP address which is the same as the external network IP address and used as the external network IP address of the NAT mapping entry which is to be established by the establishment unit according to the request message.

The NAT device may allocate, according to the designated external network IP address in the received request message sent by the client, the IP address which is the same as the external network IP address and used as the external network IP address in the NAT mapping entry to be established. A problem which occurs frequently in an existing NAT traversal solution and is that an application cannot work normally or is vulnerable to a network attack because external network IP addresses of multiple connections of a same application are different after NAT traversal is solved, and an adaptive capability of a NAT traversal protocol to an existing application is significantly improved.

### Embodiment 5

As shown in FIG. 11, this embodiment provides a communication device, which may be used as a client device, and includes: a setting unit 21 and a sending unit 22.

The setting unit 21 is configured to designate an index value in a request message which is sent to a NAT device and is for establishing a NAT mapping entry corresponding to a connection, where an external network IP address in an IP address index table corresponding to the designated index value is the same as an external network IP address in a NAT mapping entry corresponding to a connection already established by a same application; so that when establishing the NAT mapping entry according to the request message, the NAT device can allocate, according to an external network IP address which is found according to the designated index value, an IP address which is the same as the external network IP address and used as an external network IP address of a NAT mapping entry to be established by the NAT device.

The sending unit 22 is configured to send the NAT device the request message including the index value designated by the setting unit.

The communication device may designate an external network IP address in a request message which is sent to a NAT device and is for establishing a NAT mapping entry corresponding to a connection, where the designated external network IP address is the same as an external network IP address in a NAT mapping entry corresponding to any connection already established by a same application, which makes it convenient for a server to allocate, according to the designated external network IP address in the request message, a same IP address, which is used as an external network IP address of the NAT mapping entry to be established, and ensures that external network IP addresses of multiple connections of the same application are the same after the NAT traversal.

### Embodiment 6

This embodiment provides a communication device, which may also be used as a client device, has a structure similar to that of the communication device in Embodiment 4, and referring to FIG. 11, includes a setting unit and a sending unit.

The setting unit is configured to designate an external network IP address in a request message which is sent to a NAT device and is for establishing a NAT mapping entry corresponding to a connection, where the designated external network IP address is the same as an external network IP address in a NAT mapping entry corresponding to any connection already established by a same application; the designated external network IP address enables the NAT device to: when the NAT device establishes the NAT mapping entry according to the request message, allocate, according to the designated external network IP address, an IP address which is the same as the designated external network IP address and used as an external network IP address of a NAT mapping entry to be established by the NAT device.

The sending unit is configured to send the NAT device the request message including the external network IP address designated by the setting unit.

The communication device may designate an index value in a request message which is sent to a NAT device and is for establishing a NAT mapping entry corresponding to a connection, where an external network IP address in an IP address index table corresponding to the designated index value is the same as an external network IP address in a NAT mapping entry corresponding to any connection already established by a same application, which makes it convenient for the server to find, according to the designated index value in the request message, a corresponding external network IP address in the IP address index table, and allocate, according to the found external network IP address, a same IP address, which is used as an external network IP address of the NAT mapping entry to be established, and ensures that external network IP addresses of multiple connections of the same application are the same after the NAT traversal.

### Embodiment 7

As shown in FIG. 12, this embodiment provides a NAT system, including:
a client device 41 and a server side device 42, where the communication device provided in any one of Embodiment 5 and Embodiment 6 is adopted as the client device, and the NAT device provided in foregoing Embodiment 4 is adopted as the server side device.

The client device 41 is connected to the server side device 42, and is configured to: designate an external network IP address in a request message which is sent to a NAT device and is for establishing a NAT mapping entry corresponding to a connection, where the designated external network IP address is the same as an external network IP address in a NAT mapping entry corresponding to any connection already established by a same application; and send the request message to the server side device 42.

The server side device 42 is connected to the client device 41, and is configured to receive the request message which is sent by a client and is for establishing the NAT mapping entry corresponding to the connection, where the request message includes the designated external network IP address, the external network IP address is the same as an external network IP address in a NAT mapping entry corresponding to any connection already established by the same application; and when establishing the NAT mapping entry according to the received request message, allocate, according to the designated external network IP address in the request message, an IP address which is the same as the designated external network IP address and used as an external network IP address of a NAT mapping entry to be established.

It can be seen above that, in the method according to the embodiment of the present, by modifying the PCP protocol in a simple way, it is ensured in the NAT traversal that external network IP addresses of multiple connections of the same application are the same after the NAT traversal, thereby avoiding a problem that the application cannot be connected normally or vulnerable to a network attack due to inconsistency of external network IP addresses of multiple connections. Through the foregoing descriptions of the embodiments, the skilled person can clearly understand that, the present invention may be implemented by software plus a necessary hardware platform, and definitely may also be completely implemented by hardware. In most cases, the former is a preferred implementation manner. Based on such understanding, all or part of the technical solutions of the present invention that make contributions to the prior art may be embodied in a form of a software product. The software product may be configured to execute the processes of the foregoing methods. The computer software product may be stored in a storage medium, such as a ROM/RAM, a magnetic disk or an optical disk, and include several instructions to make a computer device (which may be a personal computer, a server, or a network device, and so on) perform the method described in each of the embodiments of the present invention or in some parts of the embodiments.

The foregoing descriptions are merely exemplary embodiments of the present invention, but not intended to limit the protection scope of the present invention. Any modification or replacement easily thought of by a person skilled in the art within the technical scope disclosed in the present invention shall fall within the protection scope of the present invention. Therefore, the protection scope of the present invention is subject to the appended claims.

## Claims

1. A method for allocating an external network Internet protocol, IP, address in network address translation, NAT, traversal, comprising:
receiving (11), by a NAT device, a request message which is sent by a client and is for establishing a NAT mapping entry corresponding to a connection, wherein the request message comprises a designated index value, and an external network IP address in an IP address index table corresponding to the designated index value is the same as an external network IP address in a NAT mapping entry corresponding to any connection already established by a same application of the client; and
when the NAT mapping entry is established according to the received request message, finding, by the NAT device, according to the designated index value, the corresponding external network IP address in the IP address index table, and allocating (12) an IP address which is the same as the external network IP address corresponding to the designated index value.

2. A method for allocating an external network IP address in NAT traversal, comprising:
comprising (S41), by a communication device, a designated index value in a request message which is sent to a NAT device and is for establishing a NAT mapping entry corresponding to a connection, wherein an external network IP address in an IP address table corresponding to the designated index value is the same as an external network IP address in a NAT mapping entry corresponding to any connection already established by a same application;
sending (S42), by the communication device, the NAT device the request message comprising the designated index value;
wherein the designated index value enables the NAT device to: when the NAT mapping entry is established according to the request message, find, according to the designated index value, the corresponding external network IP address in the IP address index table, allocate, according to the designated index value, an IP address which is the same as the external network IP address corresponding to the designated index value and used as an external network IP address of a NAT mapping entry to be established by the NAT device.

3. A network address translation, NAT, device, comprising:
a receiving unit (1), configured to receive a request message which is sent by a client and is for establishing a NAT mapping entry corresponding to a connection, wherein the request message comprises a designated index value, and an external network IP address in an IP address index table corresponding to the designated index value is the same as an external network IP address in a NAT mapping entry corresponding to any connection already established by a same application of the client;
an establishment unit (2), configured to establish the NAT mapping entry corresponding to the connection according to the request message received by the receiving unit; and
an allocation unit (3), wherein the allocation unit comprises:
an obtaining module (311), configured to obtain the designated index value in the request message which is received by the receiving unit, is sent by the client, and is for establishing the NAT mapping entry corresponding to the connection;
a search module (313), configured to find, according to the designated index value, a corresponding external network IP address in the IP address index table; and
a processing module (312), configured to allocate an IP address which is the same as the external network IP address corresponding to the designated index value and used as an external network IP address in the NAT mapping entry which is to be established by the establishment unit according to the request message

4. A communication device, comprising:
a setting unit (21), configured to designate an index value in a request message which is sent to a NAT device and is for establishing a NAT mapping entry corresponding to a connection, wherein an external network IP address in an IP address index table corresponding to the designated index value is the same as an external network IP address in a NAT mapping entry corresponding to any connection already established by a same application on the communication device, wherein the designated index value enables the NAT device to: when establishing the NAT mapping entry according to the request message, allocate, according to an external network IP address which is found according to the designated index value, an IP address which is the same as the external network IP address and used as an external network IP address of a NAT mapping entry to be established by the NAT device; and
a sending unit (22), configured to send the NAT device the request message comprising the index value designated by the setting unit.

5. A NAT system, comprising:
a client device and a server side device, wherein the communication device according to claim 4 is adopted as the client device, and the NAT device according to claim 3 is adopted as the server side device.

## Patentansprüche

1. Verfahren zum Zuteilen einer Internetprotokoll(IP)-Adresse eines externen Netzes beim Netzadressenübersetzungs(NAT - Network Address Translation)-Durchgang umfassend:
Empfangen (11) durch eine NAT-Vorrichtung einer Anforderungsnachricht, die durch einen Klienten gesendet wird und zum Herstellen eines NAT-Abbildungseintrags entsprechend einer Verbindung bestimmt ist, wobei die Anforderungsnachricht einen bestimmten Indexwert umfasst und eine IP-Adresse eines externen Netzes in einer IP-Adressenindextabelle entsprechend dem bezeichneten Indexwert die gleiche wie eine IP-Adresse eines externen Netzes in einem NAT-Abbildungseintrag entsprechend einer beliebigen, bereits durch die gleiche Anwendung des Klienten hergestellten Verbindung ist; und
wenn der NAT-Abbildungseintrag gemäß der empfangenen Anforderungsnachricht hergestellt ist, Finden durch die NAT-Vorrichtung gemäß dem bezeichneten Indexwert der entsprechenden IP-Adresse des externen Netzes in der IP-Adressenindextabelle und Zuteilen (12) einer IP-Adresse, die die gleiche wie die IP-Adresse des externen Netzes entsprechend dem bezeichneten Indexwert ist.

2. Verfahren zum Zuteilen einer IP-Adresse des externen Netzes beim NAT-Durchgang, umfassend:
Umfassen (S41) durch eine Kommunikationsvorrichtung eines bezeichneten Indexwertes in einer Anforderungsnachricht, die an eine NAT-Vorrichtung gesendet wird und zum Herstellen eines NAT-Abbildungseintrags entsprechend einer Verbindung bestimmt ist, wobei eine IP-Adresse eines externen Netzes in einer IP-Adresstabelle entsprechend dem bezeichneten Indexwert die gleiche ist wie eine IP-Adresse eines externen Netzes in einem NAT-Abbildungseintrag entsprechend einer bereits durch eine gleiche Anwendung hergestellten Verbindung ist;
Senden (S42) durch eine Kommunikationsvorrichtung der Anforderungsnachricht umfassend den bezeichneten Indexwert an die NAT-Vorrichtung;
wobei der bezeichnete Indexwert es der NAT-Vorrichtung ermöglicht: wenn der NAT-Abbildungseintrag gemäß der Anforderungsnachricht hergestellt ist, die entsprechende IP-Adresse des externen Netzes in der IP-Adressenindextabelle gemäß dem bezeichneten Indexwert zu finden, gemäß dem bezeichneten Indexwert eine IP-Adresse zuzuteilen, die die gleiche ist wie die IP-Adresse des externen Netzes entsprechend dem bezeichneten Indexwert und als eine durch die NAT-Vorrichtung herzustellende IP-Adresse des externen Netzes eines NAT-Abbildungseintrags benutzt wird.

3. Netzadressenübersetzungs(NAT - Network Address Translation)-Vorrichtung umfassend:
eine Empfangseinheit (1) eingerichtet zum Empfangen einer Anforderungsnachricht, die durch einen Klienten gesendet wird und zum Herstellen eines NAT-Abbildungseintrags entsprechend einer Verbindung bestimmt ist, wobei die Anforderungsnachricht einen bezeichneten Indexwert umfasst und eine IP-Adresse eines externen Netzes in einer IP-Adressenindextabelle entsprechend dem bezeichneten Indexwert die gleiche ist wie eine IP-Adresse eines externen Netzes in einem NAT-Abbildungseintrag entsprechend einer beliebigen bereits durch eine gleiche Anwendung des Klienten hergestellten Verbindung ist;
eine Herstellungseinheit (2) eingerichtet zum Herstellen des NAT-Abbildungseintrags entsprechend der Verbindung gemäß der durch die Empfangseinheit empfangenen Anforderungsnachricht; und
eine Zuteilungseinheit (3), wobei die Zuteilungseinheit umfasst:
ein Erhaltungsmodul (311) eingerichtet zum Erhalten des bezeichneten Indexwertes in der Anforderungsnachricht, die durch die Empfangseinheit empfangen wird, die von dem Klienten gesendete wird und zum Herstellen des NAT-Abbildungseintrags entsprechend der Verbindung bestimmt ist;
ein Suchmodul (313) eingerichtet zum Finden gemäß dem bezeichneten Indexwert einer entsprechenden IP-Adresse des externen Netzes in der IP-Adressenindextabelle; und
ein Verarbeitungsmodul (312) eingerichtet zum Zuteilen einer IP-Adresse, die die gleiche wie die IP-Adresse des externen Netzes entsprechend dem bezeichneten Indexwert ist und als eine IP-Adresse des externen Netzes in dem NAT-Abbildungseintrag benutzt wird, der durch die Herstellungseinheit gemäß der Anforderungsnachricht herzustellen ist.

4. Kommunikationsvorrichtung umfassend:
eine Einstellungseinheit (21) eingerichtet zum Bezeichnen eines Indexwertes in einer Anforderungsnachricht, die an eine NAT-Vorrichtung gesendet wird und zum Herstellen eines NAT-Abbildungseintrags entsprechend einer Verbindung bestimmt ist, wobei eine IP-Adresse des externen Netzes in einer IP-Adressenindextabelle entsprechend dem bezeichneten Indexwert die gleiche ist wie eine IP-Adresse des externen Netzes in einem NAT-Abbildungseintrag entsprechend einer bereits durch eine gleiche Anwendung auf der Kommunikationsvorrichtung hergestellten Verbindung, wobei der bezeichnete Indexwert es der NAT-Vorrichtung ermöglicht: beim Herstellen des NAT-Abbildungseintrags gemäß der Anforderungsnachricht eine IP-Adresse gemäß einer IP-Adresse des externen Netzes, die gemäß dem bezeichneten Indexwert gefunden wird, zuzuteilen, die die gleiche ist wie die IP-Adresse des externen Netzes und als eine IP-Adresse des externen Netzes eines durch die NAT-Vorrichtung herzustellenden NAT-Abbildungseintrags benutzt wird; und eine Sendeeinheit (22) eingerichtet zum Senden der den durch die Einstellungseinheit bezeichneten Indexwert umfassenden Anforderungsnachricht an die NAT-Vorrichtung.

5. NAT-System umfassend:
eine Klientenvorrichtung und eine serverseitige Vorrichtung, wobei die Kommunikationsvorrichtung nach Anspruch 4 als die Klientenvorrichtung eingerichtet ist und die NAT-Vorrichtung nach Anspruch 3 als die serverseitige Vorrichtung eingerichtet ist.

## Revendications

1. Procédé permettant d'attribuer une adresse de protocole Internet, IP, de réseau externe dans une traversée de traduction d'adresses réseau, NAT, comprenant les étapes suivantes :
recevoir (11), par un dispositif NAT, un message de requête qui est envoyé par un client et qui permet d'établir une entrée de mappage NAT correspondant à une connexion, le message de requête comportant une valeur d'index désignée, et une adresse IP de réseau externe dans une table d'index d'adresses IP correspondant à la valeur d'index désignée étant la même qu'une adresse IP de réseau externe dans une entrée de mappage NAT correspondant à une connexion déjà établie par une même application du client ; et
lorsque l'entrée de mappage NAT est établie selon le message de requête reçu, trouver, par le dispositif NAT, selon la valeur d'index désignée, l'adresse IP de réseau externe correspondante dans la table d'index d'adresses IP, et attribuer (12) une adresse IP qui est la même que l'adresse IP de réseau externe correspondant à la valeur d'index désignée.

2. Procédé permettant d'attribuer une adresse IP de réseau externe dans une traversée NAT, comprenant les étapes suivantes :
comprendre (S41), par un dispositif de communication, une valeur d'index désignée dans un message de requête qui est envoyé à un dispositif NAT et qui permet d'établir une entrée de mappage NAT correspondant à une connexion, une adresse IP de réseau externe dans une table d'adresses IP correspondant à la valeur d'index désignée étant la même qu'une adresse IP de réseau externe dans une entrée de mappage NAT correspondant à une connexion déjà établie par une même application ;
envoyer (S42), par le dispositif de communication, au dispositif NAT le message de requête comportant la valeur d'index désignée ;
la valeur d'index désignée permettant au dispositif NAT, lorsque l'entrée de mappage NAT est établie selon le message de requête, de trouver, selon la valeur d'index désignée, l'adresse IP de réseau externe correspondante dans la table d'index d'adresses IP, d'attribuer, selon la valeur d'index désignée, une adresse IP qui est la même que l'adresse IP de réseau externe correspondant à la valeur d'index désignée et qui est utilisée comme une adresse IP de réseau externe d'une entrée de mappage NAT devant être établie par le dispositif NAT.

3. Dispositif de traduction d'adresses réseau, NAT, comprenant :
une unité de réception (1), configurée pour recevoir un message de requête qui est envoyé par un client et qui permet d'établir une entrée de mappage NAT correspondant à une connexion, le message de requête comportant une valeur d'index désignée, et une adresse IP de réseau externe dans une table d'index d'adresses IP correspondant à la valeur d'index désignée étant la même qu'une adresse IP de réseau externe dans une entrée de mappage NAT correspondant à une connexion déjà établie par une même application du client ;
une unité d'établissement (2), configurée pour établir l'entrée de mappage NAT correspondant à la connexion selon le message de requête reçu par l'unité de réception ; et
une unité d'attribution (3), l'unité d'attribution comportant :
un module d'obtention (311), configuré pour obtenir la valeur d'index désignée dans le message de requête qui est reçu par l'unité de réception, est envoyé par le client, et permet d'établir l'entrée de mappage NAT correspondant à la connexion ;
un module de recherche (313), configuré pour trouver, selon la valeur d'index désignée, une adresse IP de réseau externe correspondante dans une table d'index d'adresses IP ; et
un module de traitement (312), configuré pour attribuer une adresse IP qui est la même que l'adresse IP de réseau externe correspondant à la valeur d'index désignée et qui est utilisée comme une adresse IP de réseau externe dans l'entrée de mappage NAT qui doit être établie par l'unité d'établissement selon le message de requête.

4. Dispositif de communication, comprenant :
une unité de paramétrage (21), configurée pour désigner une valeur d'index dans un message de requête qui est envoyé à un dispositif NAT et qui permet d'établir une entrée de mappage NAT correspondant à une connexion, une adresse IP de réseau externe dans une table d'index d'adresses IP correspondant à la valeur d'index désignée étant la même qu'une adresse IP de réseau externe dans une entrée de mappage NAT correspondant à une connexion déjà établie par une même application sur le dispositif de communication, la valeur d'index désignée permettant au dispositif NAT, lors de l'établissement de l'entrée de mappage NAT selon le message de requête, d'attribuer, selon une adresse IP de réseau externe qui est trouvée selon la valeur d'index désignée, une adresse IP qui est la même que l'adresse IP de réseau externe et qui est utilisée comme une adresse IP de réseau externe d'une entrée de mappage NAT devant être établie par le dispositif NAT ; et une unité d'envoi (22), configurée pour envoyer au dispositif NAT le message de requête comprenant la valeur d'index désignée par l'unité de paramétrage.

5. Système NAT, comprenant:
un dispositif client et un dispositif côté serveur, le dispositif de communication selon la revendication 4 étant adopté comme le dispositif client, et le dispositif NAT selon la revendication 3 étant adopté comme le dispositif côté serveur.
